# EUROPÄISCHE PATENTSCHRIFT

(11) **EP 2 639 904 B1**
(45) Veröffentlichungstag und Bekanntmachung des Hinweises auf die Patenterteilung: **16.08.2017**
(21) Anmeldenummer: 13158514.3
(22) Anmeldetag: 11.03.2013
(51) Int. Cl.: H02G 3/04, H02G 3/10

(54) **Geräteeinbaukanal und Verfahren zur Wandmontage eines Geräteeinbaukanals**
Equipment installation channel and method for the wall mounting of an equipment mounting channel
Canal pour appareillages et procédé de montage mural d'un canal pour appareillages

(30) Priorität: 12.03.2012 DE 102012102062
(43) Veröffentlichungstag der Anmeldung: 18.09.2013
(73) Patentinhaber: REHAU AG + Co, 95111 Rehau (DE)
(72) Erfinder: Seidel, Bernd, 08209 Auerbach (DE); Künzel, Werner, 95111 Rehau (DE); Christ, Michael, 95028 Hof (DE); Friedrich, Jochen, 95119 Naila (DE); Salzhuber, Frank, 90419 Nürnberg (DE); Engelbrecht, Bernd Jürgen, 90763 Fürth (DE)

(56) Entgegenhaltungen:
- EP-A1- 1 933 434
- DE-A1- 2 516 404
- DE-C1- 3 426 064

## Beschreibung

Die vorliegende Erfindung bezieht sich auf einen Geräteeinbaukanal, der einen Kanalboden mit einer an der zum Kanalinneren gewandten Innenseite angeordneten Halteschiene, zwei Seitenwände, die an den beiden Längsseiten des Kanalbodens angeordnet sind, und zwei jeweils an den Seitenwänden angeordnete, zum Kanalinneren gerichtete Schenkel umfasst. Darüber hinaus bezieht sich die vorliegende Erfindung auf ein Verfahren zur Wandmontage eines derartigen Geräteeinbaukanals.

Geräteeinbaukanäle mit den Merkmalen des Oberbegriffs des Patentanspruchs 1 sind aus der DE 34 26 064 C1 und der DE 25 16 404 A1 bekannt. Aus der EP 1 933 464 ist ein weiterer Geräteeinbaukanal mit einer Halteschiene bekannt.

Derartige Geräteeinbaukanäle sind im Stand der Technik, beispielsweise aus der DE 202 13 213 U1 bekannt. Der darin beschriebene Geräteeinbaukanal umfasst einen Boden mit daran angeformten Halteleisten, zwei Seitenwände und zwei Schenkel an den Seitenwänden. Der Boden des Geräteeinbaukanals ist an der Rückseite durchgehend ausgebildet. Zur Montage dieses Geräteeinbaukanals an der Wand sind daher zumindest zwei Personen erforderlich, eine die den Geräteeinbaukanal in seiner Lage an der Wand festhält, während die zweite den Kanal durch Befestigungsmittel wie beispielsweise Schrauben oder Bolzen an der Wand befestigt.

Auf dieser Grundlage ist es die Aufgabe der vorliegenden Erfindung, einen Geräteeinbaukanal zur Verfügung zu stellen, der die Nachteile des Standes der Technik überwindet. Insbesondere soll der erfindungsgemäße Einbaubaukanal in einem vereinfachten Verfahren, das auch von einer Person allein durchgeführt werden kann, an einer Wand befestigt werden können. Darüber hinaus soll der erfindungsgemäße Einbaukanal einfach durch ein übliches Extrusionsverfahren hergestellt werden können. Darüber hinaus liegt die vorliegende Erfindung in der Bereitstellung eines Verfahrens zur Wandmontage eines derartigen Geräteeinbaukanals.

Diese und andere Aufgaben werden durch einen Geräteeinbaukanal mit den Merkmalen des Anspruchs 1 bzw. durch ein Verfahren zur Wandmontage eines Geräteeinbaukanals mit den Merkmalen des Anspruchs 3 gelöst. Bevorzugte Ausführungsformen des erfindungsgemäßen Geräteeinbaukanals bzw. des erfindungsgemäßen Verfahrens sind in den jeweils davon abhängigen Ansprüchen beschrieben.

Gemäß der vorliegenden Erfindung wurde erkannt, dass die Montage eines Geräteeinbaukanals an einer Wand dadurch vereinfacht werden kann, dass die zur Kanalaußenseite gerichtete Rückseite des Kanalbodens einen sich im Wesentlichen über die gesamte Länge des Geräteeinbaukanals erstreckenden Bereich aufweist, in dem der Kanalboden in Richtung des Kanalinneren versetzt ist. Auf diese Weise ist es möglich, dass mit der Wand verbundene Halteelemente dazu dienen, den Geräteeinbaukanal an der Wand vorzufixieren, indem die Halteelemente in den in Richtung des Kanalinneren versetzten Bereichs des Kanalbodens eindringen. In diesem Stadium der Wandmontage kann der Geräteeinbaukanal dann entlang seiner Längsrichtung verschoben werden. In vertikaler Richtung ist die Position des Kanals jedoch festgelegt, so dass keine zusätzliche Person zum Festhalten des Kanals an der Wand mehr erforderlich ist. Von einer Einzelperson kann der Kanal somit an den mit der Wand verbundenen Halteelementen aufgehängt werden und ohne von dieser Einzelperson festgehalten zu werden, kann der Geräteeinbaukanal dann mit Befestigungselementen wie Schrauben oder Bolzen an der Wand festgelegt werden. Gemäß der vorliegenden Erfindung ist die Ausnehmung im Bereich der Halteschiene an der Rückseite des Kanalbodens angeordnet. Da die Halteschiene im Querschnitt üblicherweise etwa im Zentrum des Geräteeinbaukanals angeordnet ist, ist dadurch eine stabile Vorfixierung des Geräteeinbaukanals nach seinem Aufhängen auf mit der Wand verbundenen Halteelementen gewährleistet. Darüber hinaus ist die Halteschiene erfindungsgemäß als Hutschiene ausgebildet ist und der Bereich bildet zumindest einen Teil der Hutschienenkontur. Auf diese Weise ist der in Richtung des Kanalinneren versetzte Bereich des Kanalbodens in die Kontur der Hutschiene integriert, so dass ein vereinfachter Querschnitt des erfindungsgemäßen Geräteeinbaukanals ermöglicht wird, wodurch die Kosten für die zur Extrusion des erfindungsgemäßen Geräteeinbaukanals erforderlichen Extrusionswerkzeuge verringert werden. Dementsprechend liegt die vorliegende Erfindung in der Bereitstellung eines Geräteeinbaukanals gemäß Anspruch 1, der einen Kanalboden mit einer an der zum Kanalinneren gewandten Innenseite angeordneten Halteschiene, zwei Seitenwänden, die an den beiden Längsseiten des Kanalbodens angeordnet sind, und zwei jeweils an den Seitenwänden angeordnete, zum Kanalinneren gerichtete Schenkel umfasst, wobei die zur Kanalaußenseite gerichtete Rückseite des Kanalbodens einen sich im Wesentlichen über die gesamte Länge des Geräteeinbaukanals erstreckenden Bereich aufweist, in dem der Kanalboden in Richtung des Kanalinneren

versetzt ist, die Halteschiene als Hutschiene ausgebildet ist, der Bereich zumindest einen Teil der Hutschienenkontur bildet und der Bereich sich in Richtung einer Kanaloberseite erweiternd ausgebildet ist. Darüber hinaus stellt die vorliegende Erfindung ein Verfahren zur Wandmontage eines erfindungsgemäßen Geräteeinbaukanals zur Verfügung, das die Stufen des Verbindens von mindestens zwei Halteelementen mit der Wand, des Aufhängens des Geräteeinbaukanals an der Wand durch Einführen der mit der Wand verbundenen Halteelemente in den in Richtung des Kanalinneren versetzten Bereichs des Kanalbodens, des Positionierens des Geräteeinbaukanals durch Verschieben des Geräteeinbaukanals in seine Längsrichtung und des Festlegens des Geräteeinbaukanals an der Wand durch Befestigungselemente umfasst.

Gemäß der vorliegenden Erfindung ist die Ausnehmung im Bereich der Halteschiene an der Rückseite des Kanalbodens angeordnet. Da die Halteschiene im Querschnitt etwa im Zentrum des Geräteeinbaukanals angeordnet ist, ist dadurch eine stabile Vorfixierung des Geräteeinbaukanals nach seinem Aufhängen auf mit der Wand verbundenen Halteelementen gewährleistet.

Es kann auch von Nutzen sein, wenn der Bereich um mindestens das Doppelte, vorzugsweise mindestens das Dreifache, besonders bevorzugt mindestens das Fünffache der Wandstärke des Kanalbodens in Richtung des Kanalinneren versetzt ist. Dadurch können die mit der Wand verbundenen Halteelemente weit genug in den in Richtung des Kanalinneren versetzten Bereich des Kanalbodens eindringen, das ebenfalls zur Stabilität der Position des an den Halteelementen aufgehängten Geräteeinbaukanals beiträgt.

In Bezug auf das erfindungsgemäße Wandmontageverfahren kann es hilfreich sein, wenn das Verbinden zumindest eines der Halteelemente über Montagekonsolen erfolgt. Derartige Montagekonsolen an sich sind dem Fachmann aus dem Stand der Technik bekannt. Jedoch ist es in dem erfindungsgemäßen Verfahren erforderlich, dass die Montagekonsolen über entsprechende Halteelemente verfügen. Im erfindungsgemäßen Verfahren werden die Halteelemente dann mittels der Konsolen an der Wand befestigt, bevor der erfindungsgemäße Geräteeinbaukanal an der Wand aufgehängt wird, indem die Halteelemente in den in Richtung des Kanalinneren versetzten Bereich eindringen. Der Einsatz einer derartigen Montagekonsole kann beispielsweise dann erforderlich werden, wenn der erfindungsgemäße Geräteeinbaukanal im Bereich einer Fensterbank oder eines Heizungselementes an der Wand befestigt werden soll.

Zur Herstellung des erfindungsgemäßen Geräteeinbaukanals wird Extrudieren als Herstellungsverfahren verwendet. Es dienen thermoplastische Polymermaterialien wie Polyvinylchlorid (PVC), Polyethylen (insbesondere Polyethylen hoher Dichte HDPE) und Polypropylen (insbesondere statistisches Polypropylen PP-R) als bevorzugte Materialien für den erfindungsgemäßen Geräteeinbaukanal.

Im Folgenden soll die vorliegende Erfindung unter Bezugnahme auf die in den Figuren dargestellte Ausführungsform im Detail erläutert werden. Dabei zeigen:
- Fig. 1: eine Querschnittsansicht einer Ausführungsform des erfindungsgemäßen Montageelements; und
- Fig. 2: eine Querschnittsansicht der in Fig. 1 gezeigten Ausführungsform während der Montage an einer Wand.

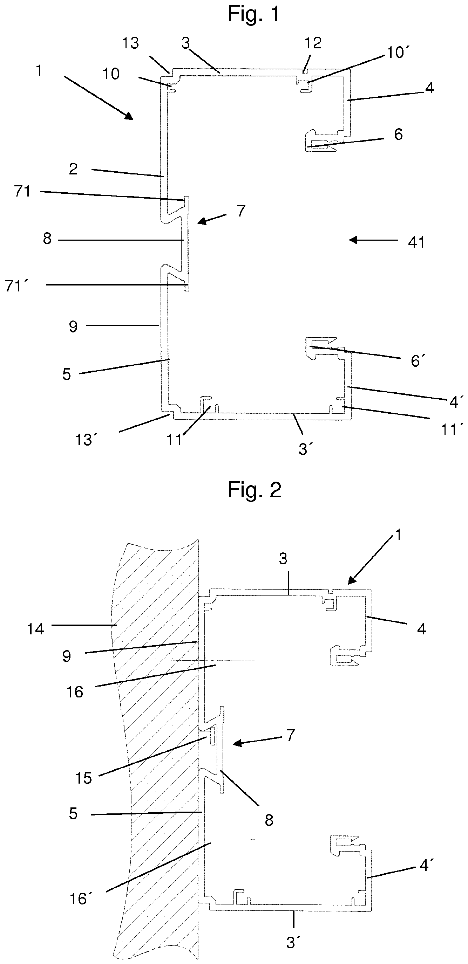

In Figur 1 ist eine Ausführungsform des erfindungsgemäßen Geräteeinbaukanals 1 in einer Querschnittsansicht gezeigt. Der erfindungsgemäße Geräteeinbaukanal 1 umfasst einen Kanalboden 2, zwei Seitenwände 3, 3' sowie zwei Schenkel 4, 4'. Dabei sind die Seitenwände 3, 3' an den beiden Längsseiten des Kanalbodens 2 etwa orthogonal zum Boden 2 und auf eine Seite des Kanals 1 gerichtet, die die Innenseite 5 des Kanalbodens 2 bildet. An den zum Kanalboden 2 entfernten Enden der Seitenwände 3, 3' sind ebenfalls jeweils etwa orthogonal die Schenkel 4, 4' angeordnet. Diese Schenkel 4,4' sind dabei zueinander weisend ausgerichtet. Die Schenkel 4, 4' berühren einander nicht, so dass eine teilweise offene Oberseite 41 ausgebildet ist. An dem zum jeweils anderen Ende des Schenkels gerichteten Ende der Schenkel 4, 4' ist jeweils eine Rastaufnahme 6,6' angeordnet, in der entsprechende Rastelemente eines Deckels (nicht abgebildet) aufgenommen werden können. Der Deckel verschließt damit die offene Oberseite 41 des erfindungsgemäßen Geräteeinbaukanals 1.

An der Innenseite 5 des Kanalbodens 2 ist eine Halteschiene 7 angeordnet, die in der in den Figuren dargestellten Ausführungsform des erfindungsgemäßen Geräteeinbaukanals als Hutschiene 7 ausgebildet ist. Im Querschnitt weist die Halteschiene 7 eine etwa C-förmige Kontur mit abgewinkelten Schenkelelementen auf. Dabei stellt der zentrale Bereich der Halteschiene 7 einen Bereich 8 des Kanalbodens 2 dar, der zum durch den Kanalboden 2, die Seitenwände 3,3' und die Schenkel 4,4' gebildeten Innenraum des erfindungsgemäßen Geräteeinbaukanals 1 hin versetzt angeordnet ist. Damit weist die zur Kanalaußenseite gerichtete Rückseite 9 des Kanalbodens 2 einen Bereich 8 auf, in dem der Kanalboden 2 in Richtung des Kanalinneren versetzt ist. Hinsichtlich ihrer Kontur ist die Hutschiene 7 also zur Kanalaußenseite hin offen, wobei jedoch im Bereich 8 vorzugsweise keine offene Verbindung zwischen Kanalinnerem und Kanaläußerem vorhanden ist. Darüber hinaus ragt der zentrale Bereich der etwa C-förmigen Halteschiene 7 an beiden Seiten über die beiden weiteren Schenkel der etwa C-förmigen Halteschiene 7 hinaus, so dass Rastelemente 71, 71' ausgebildet sind. Über die Rastelemente 71, 71' können Einbaugeräte, beispielsweise Geräteeinbaudosen, Datendosen, Steckdosen, Schalter, Empfänger für Fernsteuerungssysteme und der gleichen in dem erfindungsgemäßen Geräteinbaukanal festgelegt werden. Der Bereich 8 erstreckt sich dabei im Wesentlichen über die gesamte Länge Geräteeinbaukanals, wobei es bevorzugt ist, dass er sich über dessen gesamte Länge erstreckt. Darüber hinaus nimmt die Dicke des Bereichs 8 mit zunehmender Entfernung von der Rückseite 9 des Kanalbodens 2 vorzugsweise zu.

Ferner sind an den Seitenwänden 3, 3' jeweils zwei Paare von Aufnahmeelementen 10, 10', 11, 11' angeordnet, in die Kupplungselemente eingeschoben werden können, um zwei Teilstücke des erfindungsgemäßen Geräteeinbaukanals 1 miteinander zu verbinden. Die Aufnahmeelemente 10, 10', 11, 11' sind dabei versetzt zueinander angeordnet. Dies dient dazu, dass eine an der Seitenwand 3 angeordnete Nut 12 bei der Wandmontage des erfindungsgemäßen Geräteeinbaukanals 1 bei Zusammenbau aus zwei Teilstücken auch auf derselben Seite angeordnet ist.

Letztlich sind an den Verbindungsstellen des Kanalbodens 2 mit den Seitenwänden 3, 3' jeweils eine etwa rechtwinklige Aussparung 13, 13' angeordnet.

Zur Montage des erfindungsgemäßen Geräteeinbaukanals 1 an einer Wand 14 ist lediglich eine Person erforderlich. Dazu werden mindestens zwei Halteelemente 15 (wie z.B. Haken, Schrauben, Nägel und dergleichen) horizontal zueinander ausgerichtet mit der Wand 14 verbunden, beispielsweise in diese eingeschlagen oder eingeschraubt oder mit dieser verklebt. Alternativ dazu können die Halteelemente 15 auch mittelbar über Montagekonsolen (nicht dargestellt) mit der Wand 14 verbunden sein. Derartige Montagekonsolen werden vorzugsweise dann eingesetzt, wenn der erfindungsgemäße Geräteeinbaukanal 1 im Bereich einer Fensterbank oder eines Heizungselements an der Wand 14 befestigt werden soll. Die Halteelemente 15 sind dann mit der Montagekonsole verbunden, beispielsweise an dieser durch Befestigungsmittel wie Schrauben befestigt oder einstückig mit dieser ausgebildet. Der erfindungsgemäße Geräteeinbaukanal 1 wird dann an der Wand 14 aufgehängt, indem die Halteelemente 15 in den Bereich 8 eingeführt werden. Bei diesem Einführen werden die von der Wand 14 wegweisenden Enden der Halteelemente 15 in die dem Kanalinneren abgewandte Seite des Bereichs 8 eingebracht. Aufgrund der von der Wand 14 weg zunehmenden Dicke des Bereichs 8 ist ein stabiles Aufhängen gewährleistet. In diesem Stadium seiner Wandmontage kann der erfindungsgemäße Geräteeinbaukanal nun in horizontaler Richtung entlang seiner Längsachse verschoben und exakt positioniert werden. Dann wird in die Paare von Aufnahmeelementen 10, 10', 11, 11' eines benachbarten, bereits an der Wand 14 befestigten Teilstücks vorzugsweise jeweils ein Kupplungselement (nicht dargestellt) eingesetzt und das an den Halteelementen 15 aufgehängte weitere Teilstück des erfindungsgemäßen Geräteeinbaukanals durch horizontales Verschieben auf die über das Ende des bereits festgelegten Teilstücks des erfindungsgemäßen Geräteeinbaukanals herausragenden Kupplungselemente geschoben, so dass die beiden Teilstücke des Geräteeinbaukanals 1 direkt aneinanderstoßen und miteinander verbunden sind. Abschließend wird dieses Teilstück des erfindungsgemäßen Geräteeinbaukanals an der Wand durch Befestigungselemente 16, 16', die in Fig. 2 schematisch angedeutet sind, festgelegt. Dies kann beispielsweise dadurch erfolgen, dass der Kanal mit Schrauben, die als Befestigungselement 16, 16' fungieren und durch den Kanalboden 2 geführt in die Wand 14 eindringen, festgelegt wird. Alternativ dazu können auch Bolzen als Befestigungselemente 16, 16' fungieren, die beispielsweise mittels eines Bolzenschussgeräts durch den Kanalboden 2 in die Wand 14 eindringen und so den erfindungsgemäßen Geräteeinbaukanal an der Wand 14 festlegen.

Die vorliegende Erfindung wurde unter Bezugnahme auf die in den Figuren gezeigte Ausführungsform des erfindungsgemäßen Geräteeinbaukanals im Detail erläutert. Es versteht sich dass die vorliegende Erfindung nicht auf die dargestellte Ausführungsform beschränkt ist.

## Patentansprüche

1. Extrudierter Geräteeinbaukanal (1), umfassend
(a) einen Kanalboden (2) mit einer an der zum Kanalinneren gewandten Innenseite (5), im Querschnitt etwa im Zentrum des Geräteeinbaukanals (1) angeordneten Halteschiene (7);
(b) zwei Seitenwände (3, 3'), die an den beiden Längsseiten des Kanalbodens (2) angeordnet sind; und
(c) zwei jeweils an den Seitenwänden (3, 3') angeordnete, zum Kanalinneren gerichtete Schenkel,
wobei die zur Kanalaußenseite gerichtete Rückseite (9) des Kanalbodens (2) einen sich im Wesentlichen über die gesamte Länge des Geräteeinbaukanals (1) erstreckenden Bereich (8) aufweist, in dem der Kanalboden (2) in Richtung des Kanalinneren versetzt ist, wobei die Halteschiene (7) als Hutschiene (7) ausgebildet ist, **dadurch gekennzeichnet, dass**
der im Bereich (8) in Richtung des Kanalinneren versetzte Kanalboden (2) einen zentralen Bereich der Halteschiene (7) darstellt, zumindest einen Teil der Hutschienenkontur bildet und sich in Richtung einer Kanaloberseite (41) erweiternd ausgebildet ist.

2. Geräteeinbaukanal (1) nach Anspruch 1, **dadurch gekennzeichnet, dass** der Bereich (8) um mindestens das Doppelte der Wandstärke des Kanalbodens (2) in Richtung des Kanalinneren versetzt ist.

3. Verfahren zur Wandmontage eines Geräteeinbaukanals (1) gemäß Anspruch 1 oder Anspruch 2, das die folgenden Stufen umfasst:
(i) Verbinden von mindestens zwei Halteelementen (15) mit einer Wand (14);
(ii) Aufhängen des Geräteeinaukanals (1) an der Wand (14), indem die mit der Wand (14) verbundenen Halteelemente (15) in den Bereich (8) eingeführt werden;
(iii) Positionieren des Geräteeinbaukanals (1) durch Verschieben des Geräteeinbaukanals (1) in seine Längsrichtung; und
(iv) Festlegen des Geräteeinbaukanals (1) an der Wand (14) durch Befestigungselemente (16, 16').

4. Verfahren gemäß Anspruche 3, **dadurch gekennzeichnet, dass** das Verbinden zumindest eines der Halteelemente (15) über Montagekonsolen erfolgt.

## Claims

1. Extruded device installation channel (1), comprising
(a) a channel bottom (2) with a holding rail (7) which is arranged on the inner side (5) facing the channel interior and in cross section approximately in the centre of the device installation channel (1);
(b) two side walls (3, 3') which are arranged on the two longitudinal sides of the channel bottom (2); and
(c) two limbs which are each arranged on the side walls (3, 3') and are directed towards the channel interior,
wherein the rear side (9) of the channel bottom (2), said rear side being directed towards the outer side of the channel, has a region (8) which substantially extends over the entire length of the device installation channel (1) and in which the channel bottom (2) is offset in the direction of the channel interior,
wherein the holding rail (7) is designed as a top-hat rail (7), **characterized in that** the channel bottom (2) which is offset in the region (8) in the direction of the channel interior constitutes a central region of the holding rail (7), forms at least a part of the top-hat-rail contour and is designed in a manner expanding in the direction of a channel upper side (41).

2. Device installation channel (1) according to Claim 1, **characterized in that** the region (8) is offset in the direction of the channel interior by at least twice the wall thickness of the channel bottom (2).

3. Method for the wall mounting of a device installation channel (1) according to Claim 1 or Claim 2, which method comprises the following steps:
(i) connecting at least two holding elements (15) to a wall (14);
(ii) suspending the device installation channel (1) on the wall (14) by the holding elements (15) which are connected to the wall (14) being inserted into the region (8);
(iii) positioning the device installation channel (1) by displacing the device installation channel (1) in its longitudinal direction; and
(iv) securing the device installation channel (1) on the wall (14) by fastening elements (16, 16').

4. Method according to Claim 3, **characterized in that** at least one of the holding elements (15) is connected via mounting brackets.

## Revendications

1. Canal extrudé (1) pour l'installation d'appareillages, comprenant
(a) un fond de canal (2) avec un rail de maintien (7) disposé sur le côté intérieur (5) tourné vers l'intérieur du canal en coupe transversale environ au centre du canal pour l'installation d'appareillages (1);
(b) deux parois latérales (3, 3'), qui sont disposées sur les deux côtés longs du fond de canal (2); et
(c) deux ailes respectivement disposées sur les parois latérales (3, 3') et orientées vers l'intérieur du canal,
dans lequel le côté arrière (9) du fond de canal (2) orienté vers le côté extérieur du canal présente une région (8) s'étendant essentiellement sur toute la longueur du canal pour l'installation d'appareillages (1), dans laquelle le fond de canal (2) est décalé en direction de l'intérieur du canal, dans lequel le rail de maintien (7) est réalisé sous forme de profilé chapeau (7),
**caractérisé en ce que** le fond de canal (2) décalé en direction de l'intérieur du canal dans la région (8) représente une zone centrale du rail de maintien (7), forme au moins une partie du contour du profilé chapeau et a une forme qui s'élargit en direction d'un côté supérieur (41) du canal.

2. Canal (1) pour l'installation d'appareillages selon la revendication 1, **caractérisé en ce que** la région (8) est décalée au moins du double de l'épaisseur de paroi du fond de canal (2) en direction de l'intérieur du canal.

3. Procédé de montage mural d'un canal (1) pour l'installation d'appareillages selon la revendication 1 ou la revendication 2, qui présente les étapes suivantes:
(i) assembler au moins deux éléments de maintien (15) avec un mur (14);
(ii) suspendre le canal (1) pour l'installation d'appareillages au mur (14), par le fait que l'on introduit les éléments de maintien (15) assemblés avec le mur (14) dans la région (8);
(iii) positionner le canal (1) pour l'installation d'appareillages par déplacement du canal (1) pour l'installation d'appareillages dans sa direction longitudinale; et
(iv) fixer le canal (1) pour l'installation d'appareillages au mur (14) au moyen d'éléments de fixation (16, 16').

4. Procédé selon la revendication 3, **caractérisé en ce que** l'on effectue l'assemblage d'au moins un des éléments de maintien (15) au moyen de consoles de montage.
